# EUROPÄISCHE PATENTSCHRIFT

(11) **EP 3 048 005 B1**
(45) Veröffentlichungstag und Bekanntmachung des Hinweises auf die Patenterteilung: **24.04.2019**
(21) Anmeldenummer: 15194760.3
(22) Anmeldetag: 16.11.2015
(51) Int. Cl.: B60N 2/809, B60N 2/80, B60N 2/68

(54) **RÜCKENLEHNE EINES FAHRZEUGSITZES MIT EINER KOPFSTÜTZE**
BACKREST OF A VEHICLE SEAT WITH A HEADREST
DOSSIER D'UN SIEGE DE VEHICULE COMPRENANT UN APPUIE-TETE

(30) Priorität: 17.12.2014 DE 102014226276
(43) Veröffentlichungstag der Anmeldung: 27.07.2016
(73) Patentinhaber: Sitech Sitztechnik GmbH, 38442 Wolfsburg (DE)
(72) Erfinder: Scherer, Nicholas, 85080 Gaimersheim (DE)
(74) Vertreter: Wöhltjen, Karsten

(56) Entgegenhaltungen:
- EP-A1- 2 233 352
- WO-A1-2011/088167
- WO-A1-2013/021485
- DE-A1- 19 630 473
- DE-A1-102013 005 245
- US-A1- 2013 320 742

## Beschreibung

Die Erfindung betrifft eine Rückenlehne eines Fahrzeugsitzes mit einer Kopfstütze, die wenigstens eine Tragstange aufweist, wobei eine Tragstruktur der Rückenlehne wenigstens ein Führungsteil für die wenigstens eine Tragstange ausbildet.

Der Einsatz von Kopfstützen an Fahrzeugsitzen, wie beispielsweise Front- und/oder Fondsitzen, ist allgemein bekannt. Derartige Kopfstützen werden über sogenannte Kopfstützenstangen an einer Sitzlehne, insbesondere einer Lehnentragstruktur einer Sitzlehne des jeweiligen Fahrzeugsitzes festgelegt. Die Arretierung der Kopfstützenstangen und damit der Kopfstützen an der Sitzlehne erfolgt mittels einer Arretiereinrichtung, die eine der Anzahl der jeweiligen Kopfstützenstangen entsprechende Anzahl von Führungshülsen aufweist. Diese Führungshülsen bestehen üblicherweise aus einem Kunststoffmaterial und werden an, beziehungsweise in entsprechenden Aufnahmen der Lehnentragstruktur gehaltert, insbesondere eingerastet.

Zwischen den Führungshülsen und der Lehnentragstruktur besteht somit eine lösbare form-und/oder kraftschlüssige Verbindung. Derartige Anordnungen sind beispielsweise aus DE 10 2011 008 692 A1 und DE 10 2010 055 380 B4 bekannt.

Bei den bekannten Anordnungen ist den Führungshülsen ein beispielsweise als Drahtklammer ausgebildetes Rastelement zugeordnet. Mittels dieses Rastelementes kann die in die Führungshülse eingeschobene Tragstange der Kopfstütze höhenpositioniert und verrastet werden. Zur Entriegelung sind in Richtung der Tragstange längs verschiebliche Betätigungselemente bekannt, mittels denen das Rastelement außer Eingriff mit einem Rastelement-Eingriffsbereich der Tragstange gebracht werden kann.

Aus den Druckschriften DE 10 2013 005 245 A1, DE 196 30 473 A1, WO 2013/021485 A1, WO 2011/088167 A1, EP 2 233 352 A1 sowie US 2013/320742 A1 sind Rückenlehnen mit einer Kopfstütze bekannt, die wenigstens eine Tragstange aufweist, wobei eine Tragstruktur der Rückenlehne wenigstens ein Führungsteil für die wenigstens eine Tragstange ausbildet, welches einstückig mit der Tragstruktur ausgebildet ist.

Bei den meisten bekannten Anordnungen ist ferner eine Abdeckkappe vorgesehen, mittels der die Anordnung zum Fahrzeuginnenraum hin verdeckt ist.

Der Erfindung liegt die Aufgabe zugrunde, eine Rückenlehne eines Fahrzeugsitzes mit einer Kopfstütze zu schaffen, wobei in einfacher und sicherer Weise eine Verbindung der Kopfstütze mit der Rückenlehne erfolgen kann.

Erfindungsgemäß wird diese Aufgabe durch eine Rückenlehne mit den in Anspruch 1 genannten Merkmalen gelöst. Ausgangspunkt der Erfindung ist eine Rückenlehne eines Fahrzeugsitzes mit einer Kopfstütze,
die wenigstens eine Tragstange aufweist, wobei eine Tragstruktur der Rückenlehne wenigstens ein Führungsteil für die wenigstens eine Tragstange ausbildet, welches einstückig mit der Tragstruktur ausgebildet ist.

Dadurch, dass eine Tragstruktur der Rückenlehne gleichzeitig wenigstens ein Führungsteil für die wenigstens eine Tragstange der Kopfstütze ausbildet, kann auf die zusätzliche Anordnung einer Führungshülse, die kraft- und/oder formschlüssig mit der Tragstruktur der Rückenlehne zu verbinden ist, verzichtet werden. Neben einer Verringerung der benötigten Bauteile zur Anordnung der Kopfstütze an der Rückenlehne, wird gleichzeitig eine Verkürzung eines Kraftpfades zwischen Kopfstütze und Rückenlehne, vor allem in Längsrichtung der Tragstange erreicht.

Erfindungsgemäß ist vorgesehen, dass dem Führungsteil zur Ausbildung einer Arretierungseinrichtung für die Kopfstütze ein Rastelement und ein Entriegelungsschieber zugeordnet sind. Die Arretierungseinrichtung besteht somit lediglich aus zwei Einzelteilen, die mit dem in der Tragstruktur der Rückenlehne integrierten Führungsteil komplettiert werden. Dies führt zu einer erheblichen Verringerung des Montageaufwandes gegenüber bekannten Lösungen.

Zwischen den Teilen der Arretierungseinrichtung findet vorteilhaft eine Funktionsaufteilung statt. Das Führungsteil nimmt die Kräfte aus der Kopfstütze auf. Ferner dient es der Aufnahme des Rastelementes und als Anlage für den Entriegelungsschieber. Das Rastelement verriegelt die Kopfstütze im Führungsteil und hält den Entriegelungsschieber in dem Führungsteil. Der Entriegelungsschieber definiert die Verstellkraft der Tragstange und entriegelt die Verrastung der Kopfstütze. Ferner schließt der Entriegelungsschieber das Führungsteil zum Fahrzeuginnenraum hin ab. Das Führungsteil kann ebenso wie die Rückenlehne aus Kunststoff ausgebildet sein. In einer Kunststoff-Stahl Hybrid Lehne wird das Führungsteil während des Herstellungsprozesses einstückig an die Rückenlehne angespritzt.

In bevorzugter Ausgestaltung der Erfindung ist vorgesehen, dass das wenigstens eine Führungsteil einstückig mit der Tragstruktur ausgebildet ist. Durch diese Integration des Führungsteils in die Tragstruktur der Rückenlehne wird vorteilhaft erreicht, dass die Anzahl der Schnittstellen im Kraftfluss zwischen der Kopfstütze und der Tragstruktur der Rückenlehne reduziert werden.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Perspektivansicht einer Rückenlehne eines Fahrzeugsitzes
- Figur 2: eine schematische Explosionsdarstellung eines Arretierungsbereiches der Rückenlehne
- Figur 3: eine schematische Perspektivansicht des Arretierungsbereiches mit eingelegtem Rastdraht
- Figur 4: eine schematische Perspektivansicht eines Entriegelungsschiebers und des Rastdrahtes;
- Figur 5: eine schematische Perspektivansicht des Entriegelungsschiebers;
- Figur 6: eine schematische Ansicht einer mit einer Kopfstütze komplettierten Rückenlehne und
- Figur 7: eine schematische Schnittdarstellung durch den Arretierungsbereich mit Kopfstütze.

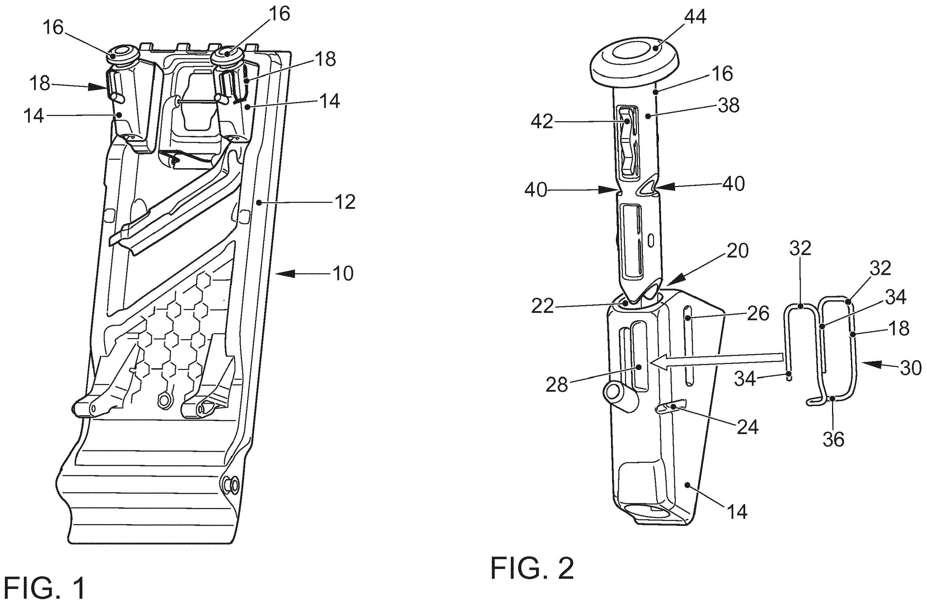

Figur 1 zeigt eine insgesamt mit 10 bezeichnete Rückenlehne eines im Einzelnen nicht dargestellten Fahrzeugsitzes. Die Rückenlehne 10 umfasst eine Tragstruktur 12. Die Tragstruktur 12 dient der Ankopplung der Rückenlehne 10 an einen nicht gezeigten Sitzbereich des Fahrzeugsitzes. Die Tragstruktur 12 dient auch der Aufnahme einer nicht gezeigten Polsterung für die Rückenlehne 10.

In die Tragstruktur 12 sind Führungsteile 14 zur Aufnahme von Tragstangen von Kopfstützen integriert. Das heißt, die Führungsteile 14 sind einstückig mit der Tragstruktur 12 ausgebildet. Die Tragstruktur 12 mit dem integrierten Führungsteil 14 kann beispielsweise aus einem metallischen Werkstoff oder aus Kunststoff bestehen. Auch sind sogenannte hybride Ausbildungen möglich, nach denen die Tragstruktur 12 teilweise aus einem metallischen Werkstoff und teilweise aus einem Kunststoff besteht. Hybride Ausgestaltungen sind besonders vorteilhaft, da bei einem verringerten Gewicht des Bauteils eine gleichbleibende oder sogar erhöhte Festigkeit des Bauteils erreicht werden kann. Das Führungsteil 14 wird bevorzugt direkt während der Herstellung der Tragstruktur 12 an diese angespritzt. Dies ist nicht nur in Hinblick auf eine einfachere Herstellung und Montage vorteilhaft. Insbesondere werden die durch eine eingeführte Kopfstütze auftretenden Kräfte, etwa in einem Crashfall, direkt in die Tragstruktur 12 abgeleitet und können besser kompensiert werden als bei einem als separates Bauteil vorgesehenem Führungsteil.

Das Führungsteil 14 nimmt einen Entriegelungsschieber 16 sowie ein Rastelement 18 auf.

In Figur 2 sind in einer schematischen Explosionsdarstellung das Führungsteil 14 der Entriegelungsschieber 16 sowie das Rastelement 18 nochmals gezeigt. Je nach Anzahl der Kopfstützen beziehungsweise der Tragstangen kann die Rückenlehne eine, zwei oder auch mehr Führungsteile 14, Entriegelungsschieber 16 und Rastelemente 18 aufweisen.

Anhand der Figur 2 wird deutlich, dass das Führungsteil 14 einen Aufnahmebereich 20 ausbildet. Dieser Aufnahmebereich 20 dient der Aufnahme einer nicht dargestellten Tragstange einer Kopfstütze und des Entriegelungsschiebers 16. Der Aufnahmebereich 20 ist hierzu mit einem in Längsrichtung verlaufenden Kanal 22 versehen.

Das Führungsteil 14 bildet einen quer zu dem Kanal 22 verlaufenden ersten Schlitz 24 aus. Der Schlitz 24 stellt hierbei eine Verbindung zu dem Kanal 22 her.

Ferner ist ein in Längsrichtung des Kanals 22 verlaufender zweiter Schlitz 26 ausgebildet. Dieser ist als Sacköffnung ausgebildet und enthält in seinem Inneren einen hier nicht sichtbaren Rastvorsprung. Das Führungsteil 14 verfügt darüber hinaus über einen Rastvorsprung 28, der ebenfalls in Längsrichtung und somit parallel zum Schlitz 26 verläuft.

Der Rastvorsprung 28 ist an der Außenseite des Führungsteiles 14, vorzugsweise einteilig ausgebildet.

Figur 2 zeigt ferner das Rastelement 18, das als Rastdraht 30 ausgebildet ist. Der Rastdraht 30 umfasst zwei u-förmig ausgebildete Schenkel 32, die in Anlageabschnitte 34 übergehen. Der Rastdraht 30 besitzt ferner einen Rastabschnitt 36, der die Schenkel 32 miteinander verbindet.

Der Rastabschnitt 36 ist derart ausgebildet, dass er durch den Schlitz 24 des Führungsteiles 14 passt. Die Anlageabschnitte 34 sind derart ausgebildet, dass sie einerseits in den Schlitz 26 hinter den dortigen Rastvorsprung 36 greifen können und andererseits den Rastvorsprung 28 hintergreifen können.

Ferner umfasst die Anordnung den Entriegelungsschieber 16, der einen rohrförmigen Grundkörper 38 besitzt. Eine Wandung des Grundkörpers 36 besitzt diametral gegenüberliegend zwei Rastausnehmungen 40 und um 90° versetzt zu den Rastausnehmungen 40 Federarme 42.

An seinem oberen Abschluss bildet der Grundkörper 38 eine Blende 44 aus, die kragenförmig über den Grundkörper 38 übersteht.

Anhand der nachfolgenden Figuren soll die Funktion der Arretierungseinrichtung näher erläutert werden.

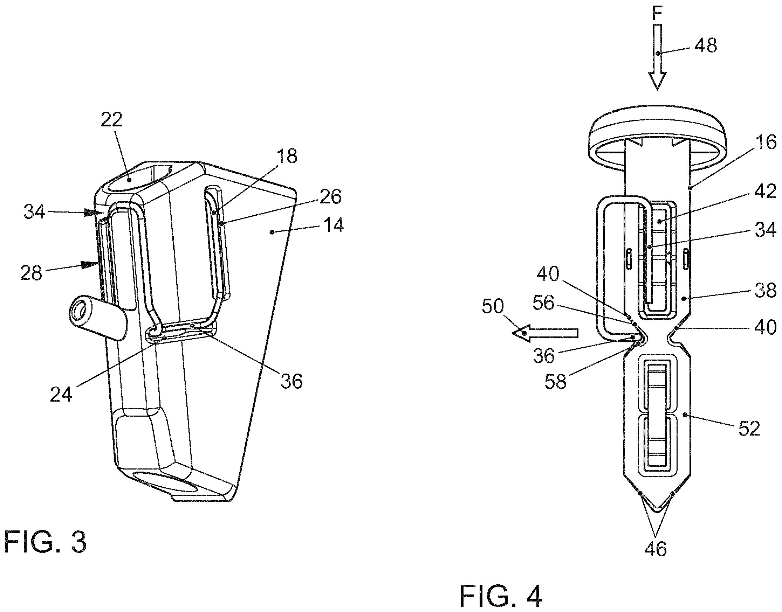

Figur 3 zeigt eine Vorkomplettierungsstufe, bei der das Führungsteil 14 mit dem Rastelement 18 bestückt ist. Das Rastelement 18 greift hierbei mit einem Anlageabschnitt 34 hinter den Rastvorsprung 28 des Führungsteils 14. Der andere Anlageabschnitt 34 greift in den Schlitz 26 und verrastet an dem dortigen Rastvorsprung. Der Rastabschnitt 36 durchgreift den Schlitz 24 und ist somit im Kanal 22 des Führungsteils 14 angeordnet. Der Rastabschnitt 36 verläuft hierbei radial zur Längserstreckung des Kanals 22.

Der in Figur 3 dargestellte Montageschritt ist somit der einzig notwendige Arbeitsschritt für die Arretierungseinrichtung einer Kopfstütze bei der Montage des Fahrzeugsitzes. Das Rastelement 18 wird, wie erläutert, in die mit der Tragstruktur 12 der Rückenlehne 10 integral ausgebildeten Führungsteil 14 eingerastet, beziehungsweise eingeclipst.

Nach erfolgter Komplettierung des Fahrzeugsitzes beziehungsweise der Rückenlehne 10 wird in den Kanal 22 des Führungsteiles 14 der Entriegelungsschieber 16 eingebracht.

Figur 4 zeigt die Positionierung des Entriegelungsschiebers 16 in Bezug auf das Rastelement 18. In Figur 4 wurde auf die Darstellung des Führungsteiles 14 verzichtet.

Wie Figur 4 verdeutlicht, besitzt der Grundkörper 38 des Entriegelungsschiebers 16 an seinem der Blende 44 abgewandten Ende Anlaufschrägen 46. Beim Eindringen des Entriegelungsschiebers 16 in Richtung des Pfeiles 48 in den Kanal 22 trifft eine der Anlaufschrägen 46 - je nach Montagerichtung des Rastelementes 18 - auf den Rastabschnitt 36. Dieser wird somit beim Aufbringen einer Kraft F in Richtung des Pfeiles 48 in Richtung des Pfeiles 50 ausgelenkt, so dass der Grundkörper 38 mit seinem unteren Abschnitt 52 den Rastabschnitt 36 passieren kann.

Der Rastabschnitt 36 wird nach entsprechender Verlagerung des Entriegelungsschiebers 16 durch die dem Rastdraht 30 innewohnende Federkraft selbsttätig in die Rastausnehmungen 40 des Grundkörpers 38 eingreifen. Die Rastausnehmungen 40 sind derart ausgebildet, dass für den Rastabschnitt 36 ein Zugang zu dem Innenraum des Grundkörpers 38 gegeben ist. Der Rastabschnitt 36 ragt somit in den Innenraum des Grundkörpers 38 ein.

Die Federarme 42 des Grundkörpers 38 des Entriegelungsschiebers 16 kommen hierbei in Anlagekontakt mit der Innenwandung des Kanals 22 des Führungsteils 14. Die Federarme 42 werden hierbei in Richtung des Innenraumes des Grundkörpers 38 gedrängt, so dass eine Haltekraft die Federarme 42 auf den Grundkörper 38 des Entriegelungsschiebers 16 wirken. Zur Verlagerung des Entriegelungsschiebers 16 muss diese Haltekraft zumindest überwunden werden. Hierdurch wird sichergestellt, dass der Entriegelungsschieber 16 eine gewünschte Position innerhalb des Führungsteiles 14 einnimmt und in dieser fixiert ist.

Der Entriegelungsschieber 16 besteht beispielsweise aus Kunststoff und kann ohne weitere Vormontage bereitgestellt werden.

Es wird deutlich, dass für die Arretierung einer Kopfstütze, insbesondere der Tragstange der Kopfstütze an einer Rückenlehne lediglich noch zwei zusätzliche Teile, nämlich das Rastelement 18 und der Entriegelungsschieber 16 benötigt werden. Das Führungsteil 14 ist bereits in die Tragstruktur der Rückenlehne 10 integriert. Neben einer einfachen Montage werden somit auch nur wenige Zulieferteile benötigt.

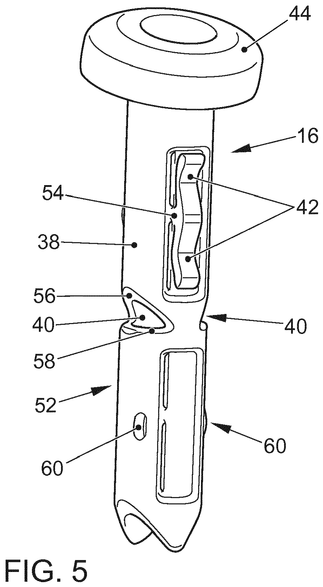

In Figur 5 ist der Entriegelungsschieber 16 nochmals in einer vergrößerten Darstellung gezeigt. Insbesondere wird die Anordnung der Federarme 42 deutlich, die um einen mit dem Grundkörper 38 verbundenen Steg 54 auslenken. Deutlich werden auch die Rastausnehmungen 40, die einen Durchgang in den Innenraum des Grundelementes 38 ausbilden. Die Rastausnehmungen 40 besitzen Anlaufschrägen 56, die in Richtung der Blende 44 verlaufen. An der dem Abschnitt 52 des Grundkörpers 38 zugewandten Seite bilden die Rastausnehmungen 40 Anschlagflächen 58 aus.

Durch diese Ausgestaltung der Rastausnehmungen 40 wird ermöglicht, dass der Entriegelungsschieber 16 wenn er die in Figur 4 gezeigte Position eingenommen hat, nicht ohne Weiteres wieder aus dem Führungsteil 14 hinaus, also entgegen der Richtung des Pfeiles 48 entnommen werden kann. Der Rastabschnitt 36 kommt mit der Anschlagfläche 58 in Kontakt und verhindert ein Herausziehen des Entriegelungsschiebers 16.

Der Grundkörper 38 besitzt ferner Anlagenasen 60, die der spielfreien Führung des Entriegelungsschiebers 16 innerhalb des Führungsteils 14 dienen.

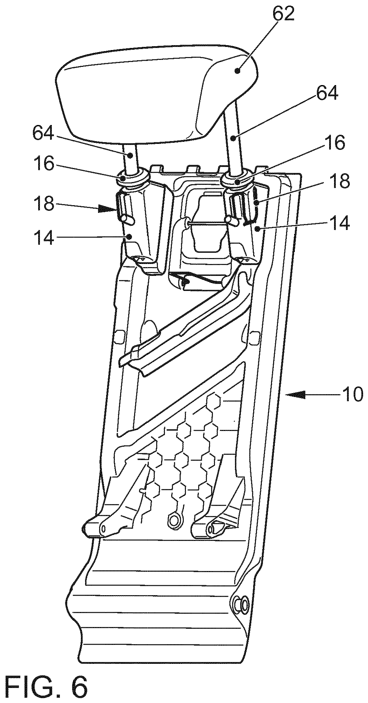

In der in Figur 6 gezeigten schematischen Ansicht ist eine mit einer Kopfstütze 62 komplettierte Rückenlehne 10 gezeigt. Gleiche Teile wie in den vorhergehenden Figuren sind mit gleichen Bezugszeichen versehen und nicht nochmals erläutert.

Die Kopfstütze 62 umfasst zwei Tragstangen 64, die jeweils in die Führungsteile 14 eingreifen und dort über die Rastelemente 18 und die Entriegelungsschieber 16 arretiert sind.

Zur Montage der Kopfstütze 62 wird diese mit ihren Tragstangen 64 in den Entriegelungsschieber 16 an der Seite der Blende 44 eingeschoben. Die Tragstangen 64 weisen bekanntermaßen über ihre Länge verschiedene Rastkerben auf, die der Höhenpositionierung der Kopfstütze 62 dienen. Beim Einschieben der Tragstangen 64 gelangen die Rastkerben in den Wirkbereich des Rastabschnittes 36 des Rastelementes 18. Die Rastkerben der Tragstangen 64 sind hierbei derart ausgebildet, dass ein Einschieben der Raststangen von Oben möglich ist, so dass eine beliebige Höhenpositionierung der Kopfstütze 62 erfolgen kann. Beim Eindrücken der Raststangen 64 werden die Rastabschnitte 36 in Richtung des Pfeiles 50 (Figur 4) nach Außen verdrängt, so dass die jeweils nächste Rastkerbe der Tragstangen in Wirkkontakt mit dem Rastabschnitt 36 gebracht werden kann. Ein Herausziehen der Tragstangen 64 ist nicht ohne weiteres möglich, da die Rastabschnitte 36 in die Rastkerben eingreifen und entgegen der Richtung des Pfeiles 48 nicht durch die Rastkerben der Tragstangen 64 in Richtung des Pfeiles 50 verlagert werden können.

Soll nun eine Höhenverstellung der Kopfstütze 62 erfolgen, wird der Entriegelungsschieber 16 in Richtung des Pfeiles 48 gedrückt. Hierdurch gelangt der Rastabschnitt 36 in Kontakt mit der Anlaufschräge 56, so dass der Rastabschnitt 36 in Richtung des Pfeiles 50 gedrängt wird. Gleichzeitig gelangt der Rastabschnitt 36 damit außer Kontakt mit den Rastkerben der Tragstange 64. Die Kopfstütze 62 ist somit in ihrer Höhe neu positionierbar. Nach Abschluss des Positioniervorganges der Kopfstütze 62 verlagert sich der Entriegelungsschieber 16 wieder geringfügig entgegen der Richtung des Pfeiles 48, so dass der Rastabschnitt 36 entgegen der Richtung des Pfeiles 50 nach innen schnappt und die Tragstange 64 und somit die Kopfstütze, fixiert. Nach Abschluss des Positioniervorganges stellt sich der Entriegelungsschieber 16 somit selbsttätig durch den Kontakt zum Rastelement 18, das versucht wieder seine Grundposition einzunehmen, automatisch und ohne eine beabsichtigte Handlung eines Fahrzeuginsassen wieder in seine Ausgangsposition zurück.

Die Verstellkraft des Entriegelungsschiebers 16 als auch die Kraft, die aufzuwenden ist, damit die Kopfstütze höhenpositionierbar ist, kann durch die dem Rastelement 18, das heißt dem Rastdraht 30 innewohnende Federkraft bestimmt werden.

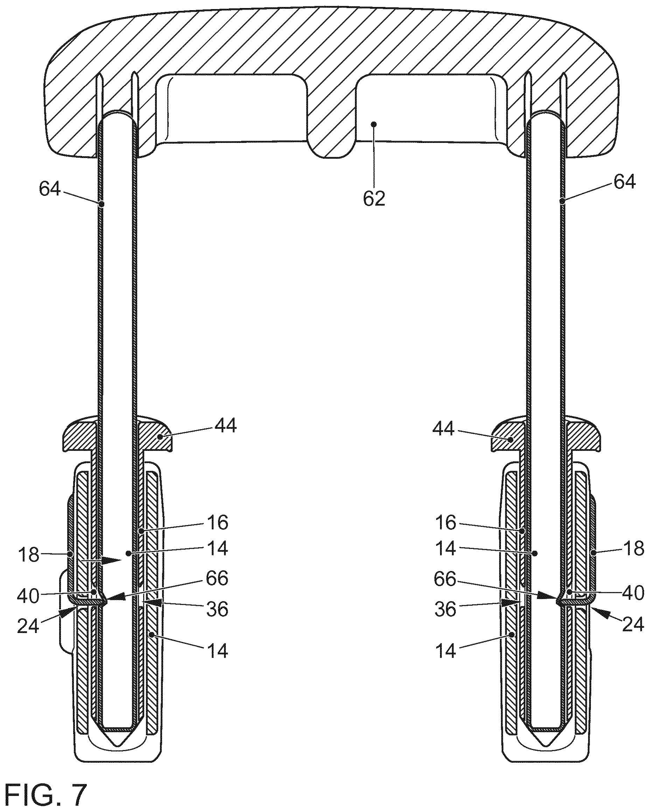

In Figur 7 sind in einer schematischen Schnittdarstellung die Kopfstütze 62 und die jeweiligen Arretierungsbereiche der Rückenlehne 10 gezeigt.

Es wird deutlich, dass der Rastabschnitt 36 des Rastelementes 18 andererseits den Schlitz 24 des Führungsteiles 14 und die Rastausnehmung 40 des Entriegelungsschiebers 16 durchgreift. Der Rastabschnitt 36 greift dann schließlich in eine Rastkerbe 66 der Tragstangen 64 ein und arretiert hiermit die Kopfstütze 62.

Nach einem weiteren nicht dargestellten Ausführungsbeispiel kann noch vorgesehen sein, dass das Führungsteil 14 mit dem Rastelement 18 und dem Entriegelungsschieber 16 lediglich zum fixen verrasten der Kopfstütze 62 an der Rückenlehne 10 dient. Eine Höhenverstellung der Kopfstütze 62 kann dann beispielsweise an den oberen Abschnitten der Tragstangen 64 erfolgen.

### Bezugszeichenliste

- 10: Rückenlehne
- 12: Tragstruktur
- 14: Führungsteil
- 16: Entriegelungsschieber
- 18: Rastelement
- 20: Aufnahmebereich
- 22: Kanal
- 24: Schlitz
- 26: Schlitz
- 28: Rastvorsprung
- 30: Rastdraht
- 32: Schenkel
- 34: Anlageabschnitt
- 36: Rastabschnitt
- 38: Grundkörper
- 40: Rastausnehmungen
- 42: Federarm
- 44: Blende
- 46: Anlaufschrägen
- 48: Pfeil
- 50: Pfeil
- 52: unterer Abschnitt
- 54: Steg
- 56: Anlaufschrägen
- 58: Anschlagflächen
- 60: Anlagenasen
- 62: Kopfstütze
- 64: Tragstange
- 66: Rastkerbe

## Patentansprüche

1. Rückenlehne (10) eines Fahrzeugsitzes mit einer Kopfstütze (62), die wenigstens eine Tragstange (64) aufweist, wobei eine Tragstruktur (12) der Rückenlehne (10) wenigstens ein Führungsteil (14) für die wenigstens eine Tragstange (64) ausbildet, welches einstückig mit der Tragstruktur (12) ausgebildet ist, **dadurch gekennzeichnet, dass** dem Führungsteil (14) zur Ausbildung einer Arretierungseinrichtung für die Kopfstütze (62) ein Rastelement (18) und ein Entriegelungsschieber (16) zugeordnet sind.

2. Rückenlehne (10) nach Anspruch 1, **dadurch gekennzeichnet, dass** die Tragstruktur (12) eine hybride Ausgestaltung aufweist, sodass sie teilweise aus einem metallischen Werkstoff und teilweise aus einem Kunststoff besteht.

3. Rückenlehne (10) nach Anspruch 1 oder 2, **dadurch gekennzeichnet, dass** das Führungsteil (14) werkstoffgleich zu der Tragstruktur (12) ausgebildet ist.

4. Rückenlehne (10) nach einem der vorherigen Ansprüche, **dadurch gekennzeichnet, dass** die Tragstruktur (10) mit ausgebildetem Führungsteil (14) aus Kunststoff besteht.

5. Rückenlehne (10) nach Anspruch 1, **dadurch gekennzeichnet, dass** das Führungsteil (14) zur Aufnahme des Rastelementes (18) einen ersten Schlitz (24), einen zweiten Schlitz (26) und einen Rastvorsprung (28) ausbildet.

6. Rückenlehne (10) nach Anspruch 1, **dadurch gekennzeichnet, dass** das Rastelement (18) ein Rastdraht (30) ist, der Anlageabschnitte (34) und einen Rastabschnitt (36) umfasst.

7. Rückenlehne (10) nach Anspruch 1 und 6, **dadurch gekennzeichnet, dass** der Entriegelungsschieber (16) wenigstens eine Rastausnehmung (40) zur Aufnahme des Rastabschnittes (36) des Rastdrahtes (30) aufweist.

8. Rückenlehne (10) nach Anspruch 7, **dadurch gekennzeichnet, dass** die Rastausnehmung (40) Anlaufschrägen (56) zur Betätigung des Rastelementes (18) aufweist.

9. Rückenlehne (10) nach Anspruch 1, **dadurch gekennzeichnet, dass** der Entriegelungsschieber (16) wenigstens einen Federarm (42) besitzt, der mit einer Innenwandung des Führungsteils (14) dergestalt zusammenwirkt, dass der Entriegelungsschieber (16) in dem Führungsteil (14) fixiert ist.

10. Rückenlehne (10) nach Anspruch 1, **dadurch gekennzeichnet, dass** der Entriegelungsschieber (16) Anlagenasen (60) zur spielfreien Führung innerhalb des Führungsteils (14) aufweist.

11. Rückenlehne (10) nach Anspruch 1, **dadurch gekennzeichnet, dass** der Entriegelungsschieber (16) eine Blende (44) zur Abdeckung des Führungsteils (14) umfasst.

## Claims

1. Backrest (10) of a vehicle seat with a headrest (62) which has at least one supporting rod (64), wherein a supporting structure (12) of the backrest (10) forms at least one guide part (14) for the at least one supporting rod (64), said guide part being formed integrally with the supporting structure (12), **characterized in that** the guide part (14) is assigned a latching element (18) and an unlocking slide (16) for forming a locking device for the headrest (62).

2. Backrest (10) according to Claim 1, **characterized in that** the supporting structure (12) has a hybrid configuration, and therefore it is partially composed of a metal material and partially of a plastic.

3. Backrest (10) according to Claim 1 or 2, **characterized in that** the guide part (14) is formed from the same material as the supporting structure (12) .

4. Backrest (10) according to one of the preceding claims, **characterized in that** the supporting structure (10) with the formed guide part (14) is composed of plastic.

5. Backrest (10) according to Claim 1, **characterized in that** the guide part (14) has a first slot (24), a second slot (26) and a latching projection (28) for receiving the latching element (18).

6. Backrest (10) according to Claim 1, **characterized in that** the latching element (18) is a latching wire (30) which comprises contact portions (34) and a latching portion (36).

7. Backrest (10) according to Claims 1 and 6, **characterized in that** the unlocking slide (16) has at least one latching recess (40) for receiving the latching portion (36) of the latching wire (30).

8. Backrest (10) according to Claim 7, **characterized in that** the latching recess (40) has start-up slopes (56) for actuating the latching element (18).

9. Backrest (10) according to Claim 1, **characterized in that** the unlocking slide (16) has at least one spring arm (42) which interacts with an inner wall of the guide part (14) in such a manner that the unlocking slide (16) is fixed in the guide part (14) .

10. Backrest (10) according to Claim 1, **characterized in that** the unlocking slide (16) has contact lugs (60) for play-free guidance within the guide part (14) .

11. Backrest (10) according to Claim 1, **characterized in that** the unlocking slide (16) comprises a panel (44) for covering the guide part (14).

## Revendications

1. Dossier (10) d'un siège de véhicule comportant un appuie-tête (62), qui présente au moins une tige de support (64), dans lequel une structure de support (12) du dossier (10) forme au moins une partie de guidage (14) pour ladite au moins une tige de support (64), qui est réalisée d'une pièce avec la structure de support (12), **caractérisé en ce qu'**un élément d'encliquetage (18) et un curseur de déverrouillage (16) sont associés à la partie de guidage (14) pour former un dispositif de blocage pour l'appuie-tête (62).

2. Dossier (10) selon la revendication 1, **caractérisé en ce que** la structure de support (12) présente une configuration hybride, de telle manière qu'elle se compose en partie d'un matériau métallique et en partie d'une matière plastique.

3. Dossier (10) selon une revendication 1 ou 2, **caractérisé en ce que** la partie de guidage (14) est réalisée dans le même matériau que la structure de support (12).

4. Dossier (10) selon l'une quelconque des revendications précédentes, **caractérisé en ce que** la structure de support (10) formée avec la partie de guidage (14) se compose de matière plastique.

5. Dossier (10) selon la revendication 1, **caractérisé en ce que** la partie de guidage (14) forme, pour recevoir l'élément d'encliquetage (18), une première fente (24), une seconde fente (26) et une saillie d'encliquetage (28) .

6. Dossier (10) selon la revendication 1, **caractérisé en ce que** l'élément d'encliquetage (18) comprend un fil d'encliquetage (30), qui comprend des parties d'appui (34) et une partie d'encliquetage (36).

7. Dossier (10) selon les revendications 1 et 6, **caractérisé en ce que** le curseur de déverrouillage (16) présente au moins un évidement d'encliquetage (40) destiné à recevoir la partie d'encliquetage (36) du fil d'encliquetage (30).

8. Dossier (10) selon la revendication 7, **caractérisé en ce que** l'évidement d'encliquetage (40) présente des rampes d'entrée (56) pour l'actionnement de l'élément d'encliquetage (18).

9. Dossier (10) selon la revendication 1, **caractérisé en ce que** le curseur de déverrouillage (16) possède au moins un bras de ressort (42), qui coopère avec une paroi intérieure de la partie de guidage (14), de telle manière que le curseur de déverrouillage (16) soit fixé dans la partie de guidage (14).

10. Dossier (10) selon la revendication 1, **caractérisé en ce que** le curseur de déverrouillage (16) présente des ergots d'appui (60) pour le guidage sans jeu à l'intérieur de la partie de guidage (14).

11. Dossier (10) selon la revendication 1, **caractérisé en ce que** le curseur de déverrouillage (16) comprend un écran (44) pour masquer la partie de guidage (14).
